# EUROPÄISCHE PATENTSCHRIFT

(11) **EP 2 496 502 B1**
(45) Veröffentlichungstag und Bekanntmachung des Hinweises auf die Patenterteilung: **15.04.2015**
(21) Anmeldenummer: 10775806.2
(22) Anmeldetag: 03.11.2010
(51) Int. Cl.: B65H 15/00, B65G 47/248

(54) **AUFRICHT-VORRICHTUNG UND AUFRICHT-VERFAHREN FÜR FLACHE GEGENSTÄNDE**
ERECTING DEVICE AND ERECTING METHOD FOR FLAT OBJECTS
DISPOSITIF ET PROCÉDÉ POUR ÉRIGER DES OBJETS PLATS

(30) Priorität: 03.11.2009 DE 102009046324; 14.07.2010 DE 102010027107
(43) Veröffentlichungstag der Anmeldung: 12.09.2012
(73) Patentinhaber: Siemens Aktiengesellschaft, 80333 München (DE)
(72) Erfinder: ENENKEL, Peter, 78462 Konstanz (DE); SCHERERZ, Holger, 15345 Rehfelde (DE); ZIMMERMANN, Armin, 78465 Konstanz (DE)
(86) Internationale Anmeldenummer: PCT/EP2010/066758
(87) Internationale Veröffentlichungsnummer: WO 2011/054882

(56) Entgegenhaltungen:
- EP-A2- 1 712 495
- DE-C1- 19 757 717
- US-A- 4 411 350
- US-A- 5 368 287
- US-A- 5 820 335

## Beschreibung

Die Erfindung betrifft eine Vorrichtung und ein Verfahren zum Aufrichten eines Gegenstands, insbesondere einer flachen Postsendung.

Um flache Postsendungen zu sortieren, werden die Postsendungen oft auf ein Endlos-Förderband geschüttet, und dieses Förderband transportiert die liegenden Postsendungen ab. Um die Postsendungen aber auszurichten und zu vereinzeln und um später die jeweiligen Zieladress-Angaben auf den Postsendungen zu lesen, sollen die Postsendungen zuvor in eine aufrecht stehende Position gebracht werden.

Eine Vorrichtung mit den Merkmalen des Oberbegriffs des Anspruchs 1 und ein Verfahren mit den Merkmalen des Oberbegriffs des Anspruchs 7 sind aus US 5368287 A1 bekannt.

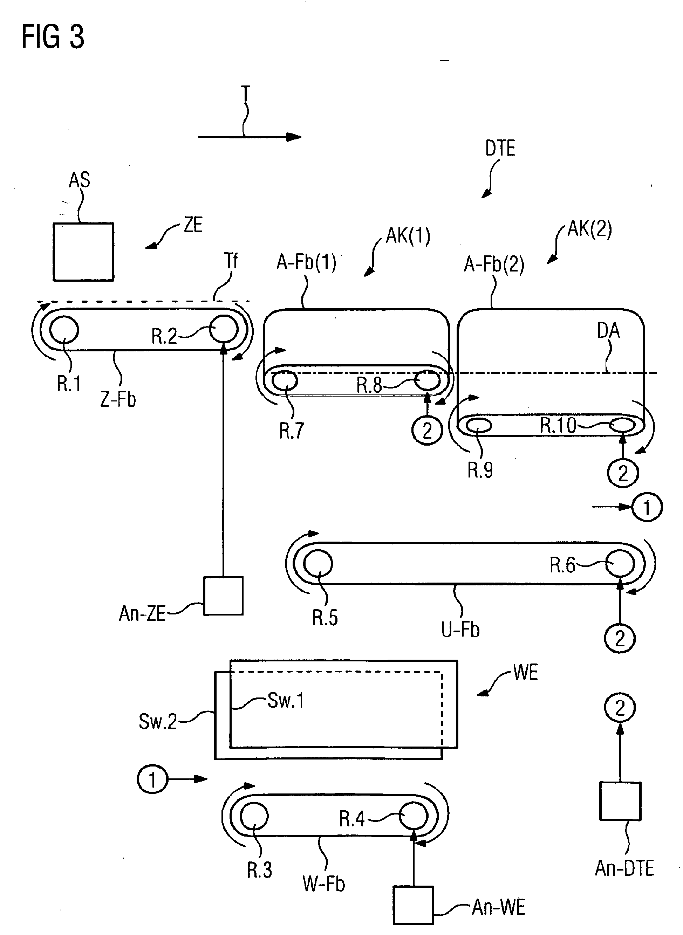

In US 4,705,157 wird eine Anordnung zum Wenden von Briefumschlägen ("envelopes") beschrieben. Die Briefumschläge werden in waagerechter Position auf einer "transition registration plate 14" angeliefert, vgl. Sp. 2 / Z. 56 - 61 und die Draufsicht von Fig. 3. Die liegenden Briefumschläge werden durch einen waagerechten "entrance nip 22" hindurch transportiert, vgl. Sp. 2 / Z. 67 - S. 3 / Z. 5. Dieser Spalt 22 tritt zwischen zwei Rollen 24, 26 auf. Die gedrehten Briefumschläge werden durch einen senkrechten "exit nip 50" hindurch transportiert. Dieser Spalt 50 tritt zwischen zwei Rollen 51, 52 auf, vgl. Sp. 3 / Z. 25 - 29. Ein gedrehtes Förderband ("drive belt 74 twisted 90 degrees") ist um die Rollen 24 und 51 herumgeführt, vgl. S. 3 / Z. 57 - 63. Ein weiteres gedrehtes Förderband 76 ist um die Rollen 26 und 52 herum geführt.

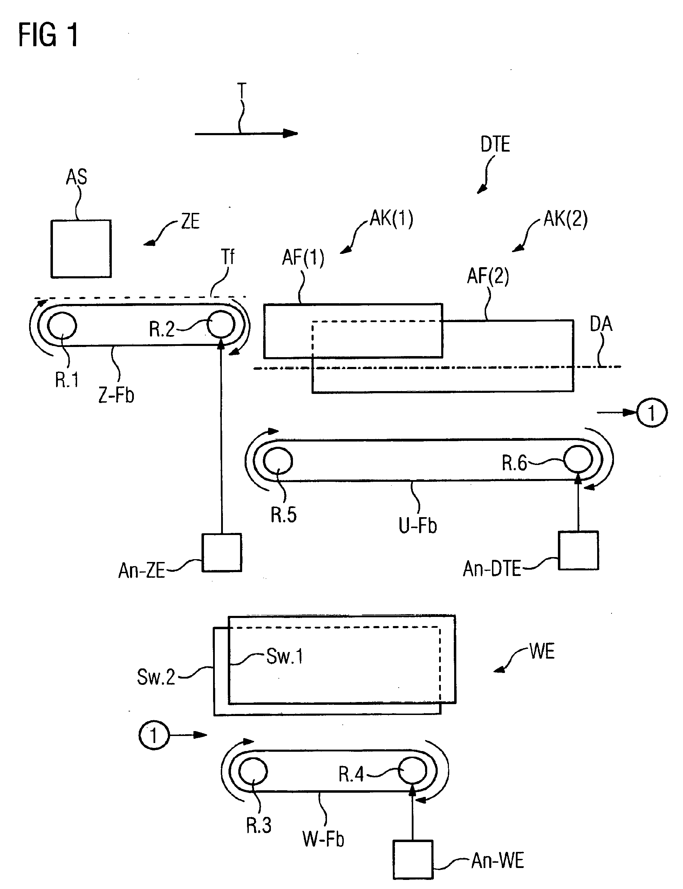

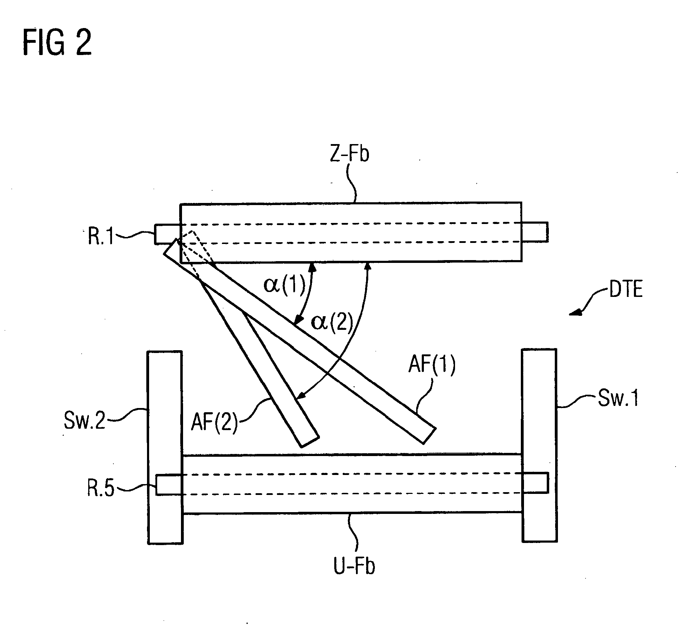

In DE 4412979 A1 wird eine Einrichtung beschrieben, die flache Gegenstände aus einer liegenden Position in eine stehende Position aufrichtet. Fig. 1 von DE 4412979 A1 zeigt diese Einrichtung in Querschnitt, Fig. 2 in Draufsicht. Die flachen Gegenstände sind z. B. Buchblocks 1. Die Buchblocks 1 werden in Fig. 2 von oben nach unten transportiert und liegen zunächst in der Zeichenebene, vgl. Sp. 1 / Z. 49 ff. Hierbei liegen die Buchblocks 1 zunächst auf einem Einlaufförderer 2, vgl. Sp. 1 / Z. 49 - 50, und werden dann auf zwei Rollenbahnen 3, 4 weitertransportiert, vgl. Sp. 1 / Z. 50 - 56. Außerdem liegen die Buchblocks 1 auf einer Kippleiste 6 auf, vgl. Sp. 1 / Z. 56 - 59. Die Rollenbahn 3 wird anschließend weggezogen, und die Buchblocks 1 liegen nur noch auf der Kippleiste 6 und der Rollenbahn 4. Jeder Buchblock 1 kippt zur Seite weg und gelangt durch das Wegkippen in eine schräge Position, vgl. Fig. 1. Drei Leitbleche 8, 9, 10 stützen einen gekippten Buchblock 1. Ein Anschlussförderer 11 transportiert die aufrecht stehenden Buchblocks 1 weiter. Dieser Anschlussförderer 11 beginnt unterhalb des Einlaufförderers 2, vgl. Fig. 3. Die Leitbleche 8, 9, 10 sowie der Anschlussförderer 11 bilden eine Rinne mit zwei Wenden. Die Wende 8, 9, 10 stützen ein Einzelstück (Buchblock 1).

Der Erfindung liegt die Aufgabe zugrunde, eine Vorrichtung mit den Merkmalen des Oberbegriffs des Anspruchs 1 und ein Verfahren mit den Merkmalen des Oberbegriffs des Anspruchs 7 bereitzustellen, bei der die Dreh- und Transport-Einrichtung kein in sich gedrehtes Endlos-Förderband erfordert, um einen Gegenstand um die Drehachse in der Gegenstandsebene drehen zu können.

Die Aufgabe wird durch eine Vorrichtung mit den Merkmalen des Anspruchs 1 und ein Verfahren mit den Merkmalen des Anspruchs 7 gelöst. Vorteilhafte Ausgestaltungen sind in den Unteransprüchen angegeben.

Durch die lösungsgemäße Vorrichtung und durch das lösungsgemäße Verfahren wird ein flacher Gegenstand in eine senkrechte Position aufgerichtet. Der Gegenstand erstreckt sich in einer Gegenstands-Ebene. Diese Gegenstands-Ebene steht nach dem Aufrichten des Gegenstands annähernd senkrecht.

Die Vorrichtung umfasst:
- eine Zuführ-Einrichtung mit einer Transportfläche,
- eine Wegführ-Einrichtung und
- eine Dreh- und Transport-Einrichtung mit mindestens zwei in Reihe geschalteten Aufricht-Stufen.

Jede Aufricht-Stufe umfasst jeweils eine Aufricht-Fläche. Jede dieser Aufricht-Flächen ist abschüssig gegen die Horizontale geneigt.

Die Zuführ-Einrichtung vermag einen flachen Gegenstand dergestalt zur Dreh- und Transporteinrichtung zu transportieren, dass der flache Gegenstand während des Transports auf der Transportfläche liegt und die Gegenstands-Ebene sich parallel zur Transportfläche erstreckt.

Die Dreh- und Transport-Einrichtung vermag einen Gegenstand zu drehen und während des Drehens zugleich in eine Transportrichtung von der Zuführ-Einrichtung zur Wegführ-Einrichtung zu transportieren. Die Drehachse, um die der Gegenstand beim Transportieren gedreht wird, liegt in der Gegenstands-Ebene des gedrehten Gegenstands. Nach dem Drehen steht die Gegenstands-Ebene annähernd senkrecht. Während die Dreh- und Transport-Einrichtung den Gegenstand in die Transportrichtung transportiert, gleitet der Gegenstand nacheinander über die Aufricht-Flächen hinweg und wird dadurch schrittweise aufgerichtet.

Die Wegführ-Einrichtung vermag einen aufgerichteten Gegenstand abzutransportieren, und zwar dergestalt, dass der aufgerichtete Gegenstand beim Abtransport annähernd senkrecht steht.

Jede Aufricht-Fläche hat - gesehen in die Transportrichtung der Dreh- und Transport-Einrichtung - eine Ausdehnung, in der die Dreh- und Transport-Einrichtung die Gegenstände transportieren vermag. An jeder Stelle entlang dieser Ausdehnung weist die Aufricht-Fläche einen Neigungswinkel größer als 0 Grad auf, um den die Aufricht-Fläche an dieser Stelle gegen die Horizontale abschüssig geneigt ist. Dieser Neigungswinkel einer Aufricht-Fläche kann über die gesamte Ausdehnung der Aufricht-Fläche konstant sein oder - gesehen in die Transportrichtung - anwachsen. Der kleinste Neigungswinkel einer Aufricht-Fläche ist größer als der oder gleich dem größten Neigungswinkel der - gesehen in die Transportrichtung - vorhergehenden Aufricht-Fläche.

Die lösungsgemäße Vorrichtung richtet einen flachen Gegenstand schrittweise in jeweils einem Schritt pro Aufricht-Stufe auf. Jeden Aufricht-Schritt führt die lösungsgemäße Vorrichtung mittels jeweils einer Aufricht-Fläche pro Aufricht-Schritt durch. Die Neigungswinkel der Aufricht-Flächen steigen also - gesehen in die Transportrichtung - an.

Die Aufricht-Stufen mit den Aufricht-Flächen lassen sich wesentlich leichter fertigen als eine Dreh- und Transport-Einrichtung in Form eines einzigen in sich gedrehten Förderbands. Der Verschleiß der Aufricht-Fläche im laufenden Betrieb ist deutlich geringer als der Verschleiß eines in sich um 90 Grad gedrehten Förderbands. Weil weniger Teile bewegt werden, müssen auch weniger Teile im laufenden Betrieb überwacht werden. Der Energieverbrauch sinkt.

Die lösungsgemäße Vorrichtung ermöglicht einen kontinuierlichen Betrieb. Ein aufzurichtender Gegenstand wird kontinuierlich transportiert. Eine Transportkomponente der Dreh- und Transport-Einrichtung transportiert kontinuierlich die flachen Gegenstände. Nicht erforderlich ist es, einen Gegenstand abzukippen, so wie es in DE 4412979 A1 beschrieben ist. Dies würde eine diskontinuierliche Bewegung der Vorrichtung erfordern und den Gegenstand mechanisch stark belasten.

Die lösungsgemäße Vorrichtung vermag Gegen-stände unterschiedlicher Abmessungen und Gewichte aufzurichten, auch wenn diese Gegenstände in zufälliger Reihenfolge die Aufricht-Vorrichtung erreichen. Mehrere aufzurichtende Gegenstände können sich teilweise überlappen oder auch zueinander beabstandet sein.

Weil ein Gegenstand mittels mehrerer Aufricht-Flächen aufgerichtet wird, wird der Gegenstand weniger stark mechanisch belastet, als wenn der Gegenstand kontinuierlich gedreht und dabei zwangsläufig in sich verdreht werden würde. Dies wäre der Fall, wenn der Gegenstand mittels eines gedrehten Förderbands aufgerichtet werden würde. Eine geringere mechanische Belastung wird auch dadurch erzielt, dass ein Gegenstand nicht auf einmal um 90° gedreht wird, sondern schrittweise und pro Schritt um jeweils einen Winkel, der kleiner als 90° ist. Das Aufrichten wird bei n Aufricht-Stufen in n oder auch in n+1 Schritten durchgeführt, wobei die Wegführ-Einrichtung den letzten Aufricht-Schritt durchführt.

Die lösungsgemäße Vorrichtung ermöglicht ein Mitstrom-Aufrichten eines flachen Gegenstands. Dies bedeutet, dass der flache Gegenstand zugleich oder wenigstens zeitlich überlappend aufgerichtet wird und in eine Richtung transportiert wird. Dies spart Zeit ein, insbesondere dann, wenn der flache Gegenstand liegend aus einer Verarbeitungs-Einrichtung kommt und aufgerichtet eine andere Verarbeitungs-Einrichtung erreichen soll. Die lösungsgemäße Vorrichtung erspart die Notwendigkeit, die Transportrichtung zu ändern, in welcher die Gegenstände vor, während und nach dem Aufrichten transportiert werden.

Dank der lösungsgemäßen Vorrichtung ist es nicht erforderlich, dass der aufzurichtenden Gegenstand an oder nahe einer Kante gefasst wird und an diese Kante hochgezogen wird. Ausreichend ist es vielmehr, den Gegenstand zu transportieren, wobei dieser Gegenstand an einer Kante oder Fläche anliegt, und die lösungsgemäße Vorrichtung richtet diesen Gegenstand dabei auf.

In einer Ausgestaltung besteht jede Aufricht-Stufe ausschließlich aus ortsfesten und nicht bewegten Teilen. Dies führt zu einem besonders geringen Verschleiß der Aufricht-Vorrichtung. Ein Gegenstand wird von einer Transport-Einrichtung der Dreh- und Transport-Einrichtung über die Aufricht-Flächen hinweg transportiert. Nur diese Transport-Einrichtung umfasst bewegliche Teile. Möglich ist es, eine durchgehende Transport-Einrichtung zu realisieren, z. B. eine Transport-Einrichtung mit mehreren Endlos-Förderbändern, die alle von demselben Antrieb angetrieben werden. Diese Ausgestaltung führt zu einer Vorrichtung mit geringem Verschleiß, weil nur wenige Teile beweglich sind.

In einer anderen Ausgestaltung wird die abschüssig geneigte Ausricht-Fläche von mindestens einer Aufricht-Stufe nicht von einem Blech, sondern von einem Endlos-Förderband gebildet. Auch dieses Aufricht-Förderband ist nicht in sich gedreht. Vielmehr verlaufen die Drehachsen der Rollen oder Wellen, um welche dieses Endlos-Förderband der Aufricht-Stufe herum geführt ist, parallel zueinander. Diese Ausgestaltung führt dazu, dass der Gegenstand während des Aufrichtens von dieser Stufe flächig gefasst wird und weitgehend ohne Schlupf transportiert wird.

Kombinationen beider Ausgestaltung sind möglich. Beispielsweise wird die erste Aufricht-Fläche durch ein ortsfestes Blech gebildet, die zweite Aufricht-Fläche durch ein Endlos-Förderband. Um einen Gegenstand über die erste Aufricht-Fläche zu transportieren, reicht oft der Impuls aus, den die Zuführ-Einrichtung auf einen aufzurichtenden Gegenstand ausübt. Damit dieser Gegenstand auch über die zweite Aufricht-Fläche hinweg transportiert wird, wird ein Transport ohne Schlupf erforderlich, bei dem der Gegenstand gut gefasst wird. Dies wird durch das Endlos-Förderband der zweiten Aufricht-Stufe erreicht.

In einer Ausgestaltung besitzt jede Aufricht-Stufe jeweils eine ebene Aufricht-Fläche. Der Neigungswinkel dieser ebenen Aufricht-Fläche ist gesehen über die gesamte Ausdehnung der Aufricht-Fläche in die Transportrichtung konstant. Der Neigungswinkel einer Aufricht-Fläche ist größer als der Neigungswinkel der vorhergehenden Aufricht-Fläche.

In einer anderen Ausgestaltung besitzt mindestens eine Aufricht-Stufe eine Aufricht-Fläche, deren Neigungswinkel - gesehen in die Transportrichtung - ansteigt, und zwar vorzugsweise kontinuierlich. Dadurch wird ein transportierter Gegenstand, der über diese Aufricht-Fläche hinweg transportiert wird, kontinuierlich aufgerichtet. Diese Aufricht-Fläche mit wachsendem Neigungswinkel lässt sich mittels eines ortsfesten Teils, z. B. mittels eines Blechs, oder auch mittels eines in sich gedrehten Förderbands realisieren.

Kombinationen beider Ausgestaltung sind möglich. Beispielsweise besitzt die - gesehen in die Transportrichtung - erste Aufricht-Fläche einen konstanten Neigungswinkel und ist eben und wird durch ein ortsfestes Teil realisiert. Die zweite Aufricht-Fläche weist eine in die Transportrichtung ansteigenden Neigungswinkel auf. Diese zweite Aufricht-Fläche wird z. B. durch ein in sich gedrehtes Endlos-Förderband gebildet. Der minimale Neigungswinkel, also der Neigungswinkel zu Beginn der zweiten Aufricht-Fläche ist größer oder gleich dem konstanten Neigungswinkel der ersten Aufricht-Fläche. Der maximale Neigungswinkel, also der Neigungswinkel am Ende der zweiten Aufricht-Fläche ist größer als der konstante Neigungswinkel der ersten Aufricht-Fläche. Möglich ist auch, dass die erste Aufricht-Fläche von einem Endlos-Förderband gebildet wird, das um zwei zueinander parallele Rollen oder Wellen herum geführt ist, und die zweite Aufricht-Fläche von einem in sich gedrehten Endlos-Förderband. Möglich ist auch, dass die erste Aufricht-Fläche von einem ortsfesten Teil und die zweite Aufricht-Fläche ebenfalls von einem ortsfesten Teil gebildet werden.

In einer Ausgestaltung ist der maximale Neigungswinkel der letzten Aufricht-Fläche kleiner als 90 Grad. Alle Aufricht-Flächen sind schräg abschüssig geneigt. In einer anderen Ausgestaltung ist die - gesehen in die Transportrichtung - letzte Aufricht-Fläche senkrecht angeordnet oder besitzt am Ende eine senkrechte Abschluss-Kante.

Vorzugsweise überlappen sich mindestens zwei Aufricht-Flächen, gesehen in eine Betrachtungsrichtung senkrecht zur Transportrichtung. Dies reduziert die Gefahr, dass ein Gegenstand hinter eine Aufricht-Fläche rutscht und dieses Ereignis einen Stau verursacht.

In einer Ausgestaltung ist die Zuführ-Einrichtung so ausgerichtet, dass die Gegenstände auf der Transportfläche liegen, d. h. die Gegenstands-Ebenen der Gegenstände sind vor dem Aufrichten waagerecht angeordnet. Nach dem Aufrichten sind die Gegenstands-Ebenen annähernd senkrecht angeordnet. Die Aufricht-Vorrichtung wendet also Gegenstände um etwa 90° und richtet sie um etwa 90° auf.

Die Erfindung lässt sich z. B. dazu einsetzen, Briefe, Pakete, Geldscheine, Druckerzeugnisse oder Scheckkarten oder Spielkarten aufzurichten.

Im Folgenden wird die Erfindung anhand eines Ausführungsbeispiels beschrieben. Dabei zeigen:
- Fig. 1: eine Ausführungsform der Aufricht-Vorrichtung mit zwei Aufrichtstufen und je einem Aufrichtblech pro Aufrichtstufe in Seitenansicht;
- Fig. 2: die Ausführungsform von Fig. 1 in einer Ansicht von vorne;
- Fig. 3: eine Ausführungsform der Aufrichtvorrichtung mit zwei Aufrichtstufen und jeweils einem Aufricht-Förderband pro Aufrichtstufe in Seitenansicht;
- Fig. 4: eine weitere Ausführungsform der Aufrichtvorrichtung mit zwei Aufrichtstufen, wobei eine Aufrichtstufe ein Aufricht-Förderband aufweist, sowie einer Anschlagkante und
- Fig. 5: eine weitere Ausführungsform mit einer ebenen Aufricht-Fläche der ersten Aufricht-Stufe und einer zweiten Aufricht-Stufe, deren Aufricht-Fläche von einem in sich gedrehten Endlos-Förderband gebildet wird.

Im Ausführungsbeispiel werden die lösungsgemäße Vorrichtung und das lösungsgemäße Verfahren eingesetzt, um flache Postsendungen (Standardbriefe, Großbriefe, Postkarten, Kataloge, ...) aufzurichten.

Die Postsendungen werden von einer Sortieranlage mit dem Ziel verarbeitet, die Postsendungen abhängig von ihrer jeweiligen Zustelladresse zu sortieren. Hierfür ist es erforderlich, die Zustelladresse jeder Postsendung zu entziffern und die Postsendung abhängig von der Zustelladresse in eine Sortierendstelle der Sortieranlage auszuschleusen. Die lösungsgemäße Vorrichtung des Ausführungsbeispiels wird eingesetzt, um die Postsendungen so zu vereinzeln, auszurichten und zu orientieren, so dass diese nachfolgenden Schritte durchgeführt werden können.

Fig. 1 zeigt eine erste Ausführungsform der lösungsgemäßen Aufricht-Vorrichtung. In dieser Ausführungsform besitzt die Aufricht-Vorrichtung zwei Aufricht-Stufen AK(1), AK(2) und eine Transport-Komponente U-Fb. Jede Aufricht-Stufe AK(1), AK(2) umfasst eine ebene ortsfeste Aufricht-Fläche AF(1), AF(2).

Zu Beginn der Verarbeitung werden die flachen Gegenstände auf ein Endlos-Förderband Z-Fb einer Zuführ-Einrichtung ZE geschüttet. Dieses Endlos-Förderband wird im Folgenden "Zuführ-Förderband" genannt. Die flachen Gegenstände liegen auf einer Transportfläche Tf des Zuführ-Förderbands Z-Fb und werden dadurch transportiert, dass die Transportfläche TF kontinuierlich bewegt wird.

Das Zuführ-Förderband Z-Fb ist um mindestens zwei Rollen herum geführt. Die Rollen sind auf waagrechten Wellen montiert. Mindestens eine Welle wird gedreht, wodurch das Zuführ-Förderband sich in eine Transportrichtung dreht. Dadurch vermag das Zuführ-Förderband Z-Fb Gegenstände in einer waagrechten Förderebene in diese Transportrichtung T zu transportieren. Die anderen Rollen sind als Laufrollen ausgestaltet. Im Beispiel von Fig. 1 und Fig. 3 wird die Rolle R.2 von einem Antrieb An-ZE kontinuierlich angetrieben, die Rolle R.1 ist eine Laufrolle. Das Zuführ-Förderband Z-Fb ist um die beiden waagerechten Rollen R.1, R.2 herum geführt.

Die flachen Postsendungen, die in zufälliger Anordnung auf dem Zuführ-Förderband Z-Fb liegen, werden zu einer Aussortierstation AS transportiert. In dieser Aussortierstation AS werden diejenigen Gegenstände aus dem Strom von Postsendungen aussortiert, die nicht maschinell verarbeitbar sind.

Alle übrigen Postsendungen transportiert das Zuführ-Förderband Z-Fb zu einer lösungsgemäßen Aufricht-Vorrichtung. Die Dreh- und Transport-Einrichtung DTE der Aufricht-Vorrichtung transportiert die Postsendungen in eine Transportrichtung T, dreht zugleich die zuvor liegenden Postsendungen um 90 Grad und bewirkt in den im Folgenden beschriebenen Ausführungsformen ein Mitstrom-Aufstellen. Die Zuführ-Einrichtung ZE und die Dreh- und Transport-Einrichtung DTE transportieren Postsendungen in dieselbe Transportrichtung T.

Die Dreh- und Transport-Einrichtung DTE transportiert die Postsendungen zu einer Wegführ-Einrichtung. Diese ist im Ausführungsbeispiel als Transportkanal mit zwei Seitenwänden Sw.1, Sw.2 ausgestaltet. Die Seitenwand Sw.2 nimmt den letzten Aufricht-Schritt vor. Dies spart eine Aufricht-Stufe mit senkrechter Aufricht-Fläche ein. Alle Aufricht-Stufen haben im Ausführungsbeispiel schräg abschüssig geneigte Aufricht-Flächen.

In einer Ausführungsform umfasst diese Dreh- und Transport-Einrichtung DTE mehrere Aufricht-Stufen AK(1), AK(2), ..., die in Reihe geschaltet sind. Jede Aufricht-Stufe AK(1), AK(2) umfasst jeweils eine ebene Aufricht-Fläche AF(i). Jede Aufricht-Fläche AF(i) einer Aufricht-Stufe AK(i) ist um eine waagrechte Drehachse gegen die Horizontalen geneigt (i = 1, 2, ...). Diese waagrechte Drehachse verläuft parallel zur Transportrichtung T und parallel zur Drehachse DA, um welche die flachen Postsendungen gedreht werden. Jede Aufricht-Fläche AF(i) ist dadurch dergestalt gegen die Horizontale geneigt, dass der Neigungswinkel α(i) der Aufricht-Fläche AF(i) einer Aufricht-Stufe AK(i) größer ist als der Neigungswinkel α(i+1) der vorhergehenden Aufricht-Fläche AF(i-1).

Die Postsendungen werden nacheinander über diese Aufricht-Flächen AF(1), AF(2), ... der Aufricht-Stufen AK(1), AK(2),... transportiert. Wegen der wachsenden Neigungswinkel der Aufricht-Flächen bewirkt der Transport über die Kaskade der Aufricht-Flächen der in Reihe geschalteten Aufricht-Stufen AK(1), AK(2), ..., dass die Postsendungen stufenweise aufgerichtet werden.

In einer Ausführungsform hat jede Aufricht-Stufe zusätzlich eine Anschlagkante, die am unteren Ende der abschüssig geneigten Fläche angeordnet ist. Die Postsendungen gleiten die schräge Fläche hinab und stoßen mit einer Kante an die Anschlagkante.

In einer anderen Ausführungsform befindet sich unterhalb der Aufricht-Stufen AK(1), AK(2), .... ein Unterflur-Förderband U-Fb mit einer waagrechten Förderebene. Die Postsendungen rutschen die Aufricht-Fläche AF(i) jeder Aufricht-Komponente AK(i) hinab und stoßen mit ihrer jeweiligen unteren Kante auf das Unterflur-Förderband U-Fb. Das Unterflur-Förderband U-Fb transportiert die Postsendungen von der Aufricht-Komponente AK(i) zu der Aufricht-Komponente AK(i+1). Das Unterflur-Förderband U-Fb ist um die beiden Rollen R.5 und R.6 herum geführt. Der Antrieb An-DTE dreht die Rolle R.6 kontinuierlich. -

Die Aufricht-Stufen AK(1), AK(2) sind dergestalt relativ zueinander angeordnet, dass jede Postsendung in die Transportrichtung T von Aufricht-Stufe zu Aufricht-Stufe transportiert werden kann, ohne von einer Aufricht-Fläche am Weitertransport gehindert zu werden. In einer Ausführungsform sind die Aufricht-Stufen AK(1), AK(2) so angeordnet, dass sich zwei aufeinander folgende Aufricht-Flächen der Aufricht-Stufen AK(1), AK(2) teilweise überlappen. In einer anderen Ausführungsform überlappen sich zwei aufeinander folgende Aufricht-Flächen nicht.

In einer Ausgestaltung werden die Aufricht-Flächen AF(1), AF(2), .... von ortsfesten Blechen gebildet, und die Postsendungen werden mittels dieser Bleche passiv aufgestellt. Die Postsendungen werden zuerst von dem Zuführ-Förderband Z-Fb und dem Unterflur-Förderband U-Fb transportiert, außerdem von der kinetischen Energie, die das Zuführ-Förderband Z-Fb den Postsendungen mitgibt. Diese Ausgestaltung erfordert den geringsten apparativen Aufwand. Weil das Unterflur-Förderband U-Fb das einzige Element der Dreh- und Transport-Einrichtung DTE ist, das bewegt wird, fallen der Verschleiß und der Wartungsbedarf sowie der Energieverbrauch sehr gering aus.

Im Ausführungsbeispiel umfasst die Wegführ-Einrichtung WE ein Unterflur-Förderband W-Fb sowie zwei Seitenwände Sw.1, Sw.2. Die Seitenwände Sw.1, Sw.2 bilden einen Transportkanal. Das Unterflur-Förderband W-Fb (Wegführ-Förderband) ist um zwei Rollen R.3, R.4 herumgeführt. Ein Antrieb An-WE dreht kontinuierlich die Rolle R.4.

Fig. 1 und Fig. 2 zeigen beispielhaft eine Ausführungsform mit zwei Aufricht-Stufen AK(1), AK(2) und jeweils einer ortsfesten Aufricht-Fläche AF(1), AF(2) pro Aufricht-Stufe AK(1), AK(2). Eine lösungsgemäße Aufricht-Vorrichtung kann auch drei oder noch mehr Aufricht-Stufen umfassen, die alle in Reihe geschaltet sind.

Unterhalb der beiden Aufricht-Komponente AK(1), AK(2) befindet sich ein waagerechtes Unterflur-Förderband U-Fb, das um zwei Rollen R.5, R.6 herum geführt ist. Die Postsendungen werden zunächst über die erste Aufricht-Stufe AK(1) und dann über die zweite Aufricht-Stufe AK(2) hinweg transportiert. Die Zeichenebene von Fig. 2 steht senkrecht auf der Transportrichtung T, und die Transportrichtung T zeigt vom Betrachter der Fig. 2 weg. Gesehen in die Betrachtungsrichtung von Fig. 2 befindet sich das Blech AF(1), und das Zuführ-Förderband befindet sich vor dem Blech AF(1). In Fig. 2 sind der Neigungswinkel α(1) der Aufricht-Fläche AF(1) und der Neigungswinkel α(2) der Aufricht-Fläche AF(2) eingetragen.

In der Ausgestaltung von Fig. 1 und Fig. 2 transportiert das Zuführ-Förderband Z-Fb liegende Postsendungen bis zur ersten Aufricht-Fläche AF(1). Die Postsendungen rutschen zunächst in Richtung des Unterflur-Förderband U-Fb. Die liegenden Postsendungen fallen vom Zuführ-Förderband auf die abschüssig geneigte Aufricht-Fläche AF(1). Nachdem die Kante einer fallenden Postsendung die Aufricht-Fläche AF(1) erreicht hat, wird die weiter fallende Postsendung gedreht, bis sie mit der Oberfläche auf der Aufricht-Fläche AF(1) liegt. Die Postsendung gleitet hangabwärts, bis sie die untere Kanten des Unterflur-Förderbands U-Fb erreicht.

In einer alternativen Ausgestaltung werden die Flächen der Aufricht-Stufen AK(1), AK(2) ebenfalls von angetriebenen Endlos-Förderbändern gebildet, und zwar von jeweils einem Endlos-Förderband A-Fb(1), A-Fb(2) pro Aufricht-Stufe AK(1), AK(2). Jedes Endlos-Förderband A-Fb(1), A-Fb(2) ist um jeweils zwei Rollen geführt, die auf zwei gegenüber der Horizontalen geneigten und zueinander parallelen Wellen sitzen. Die Förderbänder der Aufrichtstufen werden "Aufricht-Förder-bänder" genannt. Das Aufricht-Förderband A-Fb(1) ist um die beiden Rollen R.7 und R.8 herum geführt. Das Aufricht-Förderband A-Fb(2) ist um die beiden Rollen R.9 und R.10 herum geführt. Die Rollen R.8 und R.10 werden angetrieben, die Rollen R.7 und R.9 sind Laufrollen.

Fig. 3 zeigt beispielhaft diese alternative Ausgestaltung, ebenfalls mit zwei Aufricht-Stufen AK(1), AK(2). Die erste Aufricht-Stufe AK(1) besitzt ein schräg angeordnetes Aufricht-Förderband A-Fb(1), die zweite Aufricht-Stufe AK(2) ein schräg angeordnetes Aufricht-Förderband A-Fb(2). Die Aufricht-Förderbänder A-Fb(1) und A-Fb(2) grenzen aneinander, so dass Postsendungen von dem Förderband A-Fb(1) auf das nachfolgende Förderband A-Fb(2) gelangen.

Im Ausführungsbeispiel von Fig. 3 besitzt die Dreh- und Transport-Einrichtung DTE drei Endlos-Förderbänder U-Fb, A-Fb(1), A-Fb(2). In einer Abwandlung ist anstelle des Unterflur-Förderbands U-Fb eine durchgehende Anschlagskante vorgesehen, die sich in die Transportrichtung T entlang der gesamten Dreh- und Transport-Einrichtung DTE erstreckt. Die Postsendungen stehen mit einer Kante auf der Anschlagkante und gleiten über diese Anschlagkante hinweg, während sie in die Transportrichtung T transportiert werden. Die Postsendungen werden in dieser Abwandlung ausschließlich von den Aufricht-Förderbändern A-Fb(1), A-Fb(2) transportiert.

Kombinationen dieser Ausgestaltungen sind möglich. Beispielsweise besitzt eine Aufricht-Stufe AK(1), AK(2) ein Endlos-Förderband, das gegen die Horizontale geneigt ist und die Aufricht-Fläche dieser Aufricht-Stufe AK(1), AK(2) bildet. Eine andere Aufricht-Stufe besitzt eine Aufricht-Fläche ohne bewegliche Teile. Möglich ist, dass ein Unterflur-Förderband U-Fb und eine Anschlagkante in Reihe geschaltet sind und eine Postsendung vom Unterflur-Förderband U-Fb über eine Teilstrecke und von einem geneigten Endlos-Förderband über eine andere Teilstrecke transportiert wird.

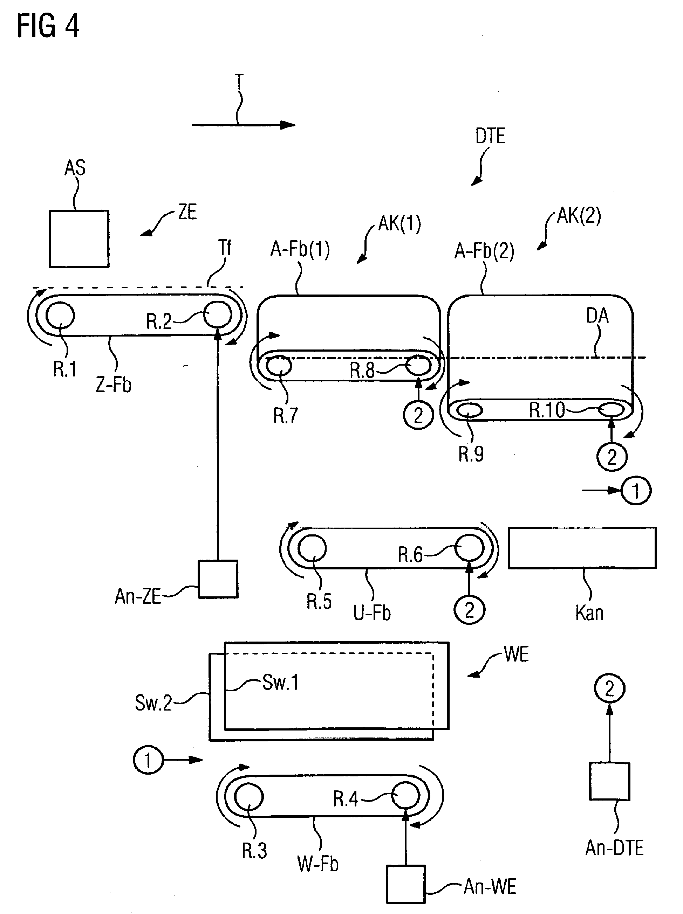

Fig. 4 zeigt beispielhaft eine solche Kombination. Die beiden Aufricht-Stufen AK(1) und AK(2) umfassen jeweils ein schräg geneigtes Endlos-Förderband A-Fb(1), A-Fb(2). Unterhalb des Endlos-Förderbands A-Fb(1) befindet sich ein Unterflur-Förderband U-Fb. Unterhalb des Endlos-Förderbands A-Fb(2) befindet sich eine Anschlagkante Kan. Das Unterflur-Förderband U-Fb ist etwas länger als das schräg geneigte Aufricht-Förderband A-Fb(1).

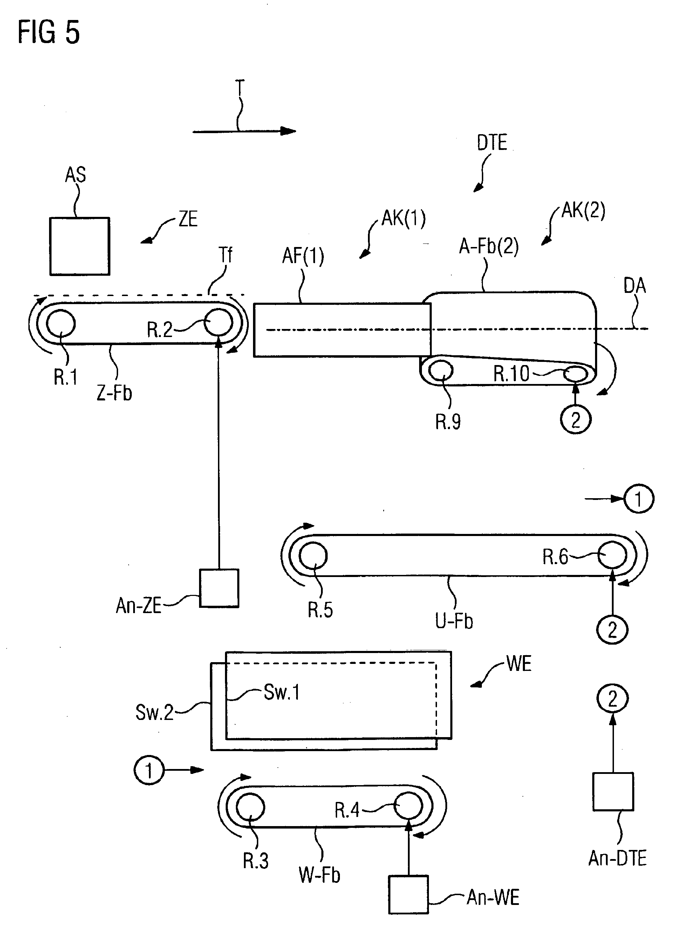

In allen bislang beschriebenen Ausführungsformen haben alle Aufricht-Stufen ebene Aufricht-Flächen. Fig. 5 zeigt eine abweichende Ausführungsform. Die erste Aufricht-Stufe AK(1) besitzt eine ebene Aufricht-Fläche AF(1), die einen Neigungswinkel von α(1) gegen die horizontale aufweist. Die zweite Aufricht-Stufe AK(2) besitzt ein Endlos-Förderband A-Fb(2), dessen Oberfläche die Aufricht-Fläche der zweiten Aufricht-Stufe AK(2) bildet. Das Endlos-Förderband A-Fb(2) ist um zwei Rollen oder Wellen R.9 und R.10 herumgeführt. Die Drehachse der Rolle R.9 ist um einen Neigungswinkel α(2.1) gegen die horizontale geneigt, die Drehachse der Rolle R.10 um einen Neigungswinkel α(2.2). Es gilt **(**α2.1)< α(2.2), so dass die Aufricht-Fläche der zweiten Aufricht-Stufe AK(2) kontinuierlich von α(2.1) nach α(2.2) steigt. Weiterhin gilt α(1)< α(2.1) oder α(1) = α(2.1). Eine Postsendung, die über die zweite Aufricht-Stufe AK(2) der Vorrichtung von Fig. 5 gleitet, wird kontinuierlich aufgerichtet, so dass der Neigungswinkel der Postsendung von α(2.1) nach α(2.2) ansteigt.

### Bezugszeichenliste

| *Bezugszeichen* | *Bedeutung* |
|---|---|
| α(i) | Neigungswinkel, um welchen die Aufricht-Fläche AF(i) gegen die Horizontale geneigt ist |
| A-Fb(1), A-Fb (2) | Endlos-Förderbänder der Aufricht-Stufen AK(1), AK(2), Aufricht-Förderbänder genannt |
| AF(1), AF(2) | Aufricht-Flächen der Aufricht-Stufen AK(1), AK(2) |
| AK(1), AK(2) | Aufricht-Stufen der Dreh- und Transport-Einrichtung DTR |
| An-DTE | Antrieb der Dreh- und Transporteinrichtung DTE, dreht die Rolle R.6 des Unterflur-Förderbands U-Fb |
| An-WE | Antrieb der Wende-Einrichtung WE, dreht die Rolle R.4 des Wegführ-Förderbands W-Fb |
| An-ZE | Antrieb der Zuführ-Einrichtung ZE, dreht die Rolle R.2 des Zuführ-Förderbands Z-Fb |
| AS | Aussortierstation |
| DA | Drehachse, um die die Dreh- und Transport-Einrichtung die flachen Postsendungen dreht |
| Kan | Anschlagkante der Dreh- und Transport-Einrichtung WTE |
| R.1, R.2 | Rollen des Zuführ-Förderbands Z-Fb der Zuführ-Einrichtung ZE |
| R.3, R.4 | Rollen des Wegführ-Förderbands W-Fb der Wegführ-Einrichtung WE |
| R.5, R.6 | Rollen des Unterflur-Förderbands U-Fb |
| R.7, R.8 | Rollendes Endlos-Förderband A-Fb(1) der ersten Aufricht-Stufe AK(1) |
| R.9, R.10 | Rollen des Endlos-Förderbands A-Fb(2) der zweiten Aufricht-Stufe AK(2) |
| Sw.1 | Seitenwand der Wegführ-Einrichtung WE |
| T | Transportrichtung |
| Tf | Transportfläche des Zuführ-Förderbands Z-Fb |
| U-Fb | Unterflur-Förderband der Dreh- und Transport-Einrichtung |
| WE | Wegführ-Einrichtung |
| W-Fb | Endlos-Förderband der Wegführ-Einrichtung WE |
| Z-Fb | Endlos-Förderband der Zuführ-Einrichtung ZE, Zuführförderband |
| ZE | Zuführ-Einrichtung |

## Patentansprüche

1. Vorrichtung zum Aufrichten eines Gegenstands,
wobei
der Gegenstand sich in einer Gegenstandsebene erstreckt, die Vorrichtung
- eine Zuführ-Einrichtung (ZE) mit einer Transportfläche (Tf),
- eine Wegführ-Einrichtung (WE) und
- eine Dreh- und Transport-Einrichtung (DTE) umfasst,
die Zuführ-Einrichtung (ZE) dazu ausgestaltet ist, einen flachen Gegenstand dergestalt zu transportieren,
dass der Gegenstand während des Transports auf der Transportfläche (Tf) liegt und die Gegenstandsebene sich parallel zur Transportfläche (Tf) erstreckt,
die Dreh- und Transport-Einrichtung (DTE) dazu ausgestaltet ist,
- einen Gegenstand um eine in der Gegenstandsebene liegende Drehachse (DA) dergestalt zu drehen, dass die Gegenstandsebene des Gegenstands nach dem Drehen annähernd senkrecht steht, und
- den Gegenstand beim Drehen in eine Transportrichtung (T) von der Zuführ-Einrichtung (ZE) zur Wegführ-Einrichtung (WE) zu transportieren, und
die Wegführ-Einrichtung (WE) dazu ausgestaltet ist, einen gedrehten Gegenstand so abzutransportieren, dass dessen Gegenstandsebene beim Abtransport annähernd senkrecht steht,
**dadurch gekennzeichnet, dass**
- die Dreh- und Transport-Einrichtung (DTE) mindestens zwei in Reihe geschaltete Aufricht-Stufen [AK(1), AK(2)] umfasst,
- jede Aufricht-Stufe [AK(1), AK(2)] jeweils eine Aufricht-Fläche [AF(1), AF(2)] umfasst,
- die Dreh- und Transport-Einrichtung (DTE) dazu ausgestaltet ist, einen Gegenstand beim Drehen dergestalt in die Transportrichtung (T) zu transportieren, dass der Gegenstand nacheinander über alle Aufricht-Flächen [AF(1), AF(2)] hinweg gleitet und dadurch schrittweise aufgerichtet wird und
- jede dieser Aufricht-Flächen [AF(1), AF(2)] an jeder Stelle entlang der Ausdehnung der Aufricht-Fläche [AF(1), AF(2)] in die Transportrichtung (T) um jeweils einen Neigungswinkel [α(1), α(2)] abschüssig gegen die Horizontale geneigt ist,
- wobei der kleinste Neigungswinkel [α(2)] einer Aufricht-Fläche [AF(2)] größer ist als der größte Neigungswinkel [α(1)] der - gesehen in die Transportrichtung (T) - vorhergehenden Aufricht-Fläche [AF(1)],

2. Vorrichtung nach Anspruch 1,
**dadurch gekennzeichnet, dass**
die Dreh- und Transport-Einrichtung (DTE) eine Transport-Einrichtung mit einer angetriebenen Transport-Komponente (U-Fb) besitzt,
die Transport-Komponente (U-Fb) so angeordnet ist, dass
- ein Gegenstand auf der Transportkomponente (U-Fb) steht, während der Gegenstand über die Aufricht-Flächen [AF(1), AF(2)] oder wenigstens über eine Aufricht-Fläche hinweg gleitet, und
- die Transport-Komponente (U-Fb) den Gegenstand während des Drehens in die Transportrichtung (T) transportiert.

3. Vorrichtung nach Anspruch 1 oder Anspruch 2,
**dadurch gekennzeichnet, dass**
- mindestens eine Aufricht-Stufe [AK(1), AK(2)] ein Endlos-Förderband [A-Fb(1), A-Fb(2)] umfasst, und
- das Endlos-Förderband [A-Fb(1), A-Fb(2)] dergestalt gegen die Horizontale geneigt angeordnet ist,
dass die Aufricht-Fläche [AF(1), AF(2)] dieser Aufricht-Stufe [AK(1), AK(2)] von diesem Endlos-Förderband [A-Fb(1), A-Fb(2)] gebildet wird.

4. Vorrichtung nach Anspruch 3,
**dadurch gekennzeichnet, dass**
mindestens eine Aufricht-Stufe [AK(2)] ein Endlos-Förderband [A-Fb(2)] umfasst, - welches in sich dergestalt gedreht ist,
dass der Neigungswinkel der Aufricht-Fläche dieser Aufricht-Stufe [AK(2)] gesehen in die Transportrichtung (T) wächst.

5. Vorrichtung nach einem der Ansprüche 1 bis 4,
**dadurch gekennzeichnet, dass**
- die Dreh- und Transport-Einrichtung (DTE) eine Anschlagkante (Kan) umfasst,
- die Anschlagkante (Kan) unterhalb der Aufricht-Stufen [AK(1), AK(2)] angeordnet ist und
- die Anschlagkante (Kan) so angeordnet ist, dass ein Gegenstand auf der Anschlagkante (Kan) steht und gleitet, während der Gegenstand über die Aufricht-Flächen [AF(1), AF(2)] oder wenigstens über eine Aufricht-Fläche hinweg gleitet.

6. Vorrichtung nach einem der Ansprüche 1 bis 5,
**dadurch gekennzeichnet, dass**
- zwei Aufricht-Stufen [AF(1), AF(2)], die - gesehen in die Transportrichtung (T) - unmittelbar aufeinander folgen,
- so ausgestaltet sind, dass sich ihre Aufricht-Flächen [AF(1), AF(2)] - gesehen in eine Richtung senkrecht zur Transportrichtung (T) - überlappen.

7. Verfahren zum Aufrichten eines Gegenstands,
wobei
der Gegenstand sich in einer Gegenstands-Ebene erstreckt und
das Verfahren die Schritte umfasst, dass der Gegenstand dergestalt zu einer Dreh- und Transport-Einrichtung (DTE) transportiert wird, dass
- der Gegenstand während dieses Transports auf einer Transportfläche (Tf) liegt und
- die Gegenstands-Ebene sich parallel zur Transportfläche (Tf) erstreckt,
die Dreh- und Transport-Einrichtung (DTE) den flachen Gegenstand
- um eine in der Gegenstands-Ebene liegende Drehachse (DA) dergestalt dreht, dass die Gegenstands-Ebene des Gegenstands nach dem Drehen annähernd senkrecht steht, und
- beim Drehen in eine Transportrichtung (T) transportiert und
der gedrehte Gegenstand so abtransportiert wird, dass dessen Gegenstands-Ebene beim Abtransport annähernd senkrecht steht,
**dadurch gekennzeichnet, dass**
die Dreh- und Transport-Einrichtung (DTE) mindestens zwei in Reihe geschaltete Aufricht-Flächen [AF(1), AF(2)] umfasst,
die Dreh- und Transport-Einrichtung (DTE) den Gegenstand beim Drehen dergestalt in die Transportrichtung (T) transportiert, dass
- der Gegenstand nacheinander über alle Aufricht-Flächen [AF(1), AF(2)] hinweg gleitet und
- der Gegenstand durch diesen Transport schrittweise aufgerichtet wird, und
jede dieser Aufricht-Flächen [AF(1), AF(2)] an jeder Stelle entlang der Ausdehnung der Aufricht-Fläche [AF(1), AF(2)] in der Transportrichtung (T) um jeweils einen Neigungswinkel [α(1), α(2)] abschüssig gegen die Horizontale geneigt ist,
wobei der kleinste Neigungswinkel [α(2)] einer Aufricht-Fläche [AF(2)] größer ist als der größte Neigungswinkel der - gesehen in die Transportrichtung (T) - vorhergehenden Aufricht-Fläche [AF(1)].

8. Verfahren nach Anspruch 7,
**dadurch gekennzeichnet, dass**
der flache Gegenstand mit einer Kante auf einer Transport-Komponente (U-Fb) der Dreh- und Transport-Einrichtung (DTE) steht,
während der Gegenstand über die Aufricht-Flächen [AF(1), AF(2)] hinweg gleitet, und
die Transport-Komponente (U-Fb) den Gegenstand während des Drehens in die Transportrichtung (T) transportiert.

## Claims

1. Apparatus for erecting an object,
wherein
the object extends in an object plane,
the apparatus comprises
a feeding device (ZE) with a transporting area (Tf),
a removal device (WE) and
a turning and transporting device (DTE),
the feeding device (ZE) is designed for transporting a flat object in such a way
that the object lies on the transporting area (Tf) during transport and the object plane extends parallel to the transporting area (Tf),
the turning and transporting device (DTE) is designed for turning an object about an axis of rotation (DA), lying in the object plane, in such a way that, after the turning, the object plane of the object is approximately perpendicular, and for transporting the object while it is being turned in a transporting direction (T) from the feeding device (ZE) to the removal device (WE), and
the removal device (WE) is designed for transporting away a turned object in such a way that, while it is being transported away, its object plane is approximately perpendicular,
**characterized in that**
the turning and transporting device (DTE) comprises at least two erecting stages [AK(1), AK(2)] connected in series,
each erecting stage [AK(1), AK(2)] respectively comprises an erecting area [AF(1), AF(2)],
the turning and transporting device (DTE) is designed for transporting an object while it is being turned in the transporting direction (T) in such a way that the object slides over all the erecting areas [AF(1), AF(2)] one after the other, and is thereby erected step by step, and
each of these erecting areas [AF(1), AF(2)] is inclined in a sloping manner with respect to the horizontal at each point along the extent of the erecting area [AF(1), AF(2)] in the transporting direction (T) by in each case an angle of inclination [α(1), α(2)],
wherein the smallest angle of inclination [α(2)] of an erecting area [AF(2)] is greater than the greatest angle of inclination [α(1)] of the preceding erecting area [AF(1] - seen in the transporting direction (T).

2. Apparatus according to Claim 1,
**characterized in that**
the turning and transporting device (DTE) has a transporting device with a driven transporting component (U-Fb),
the transporting component (U-Fb) is arranged in such a way that
an object stands on the transporting component (U-Fb) while the object is sliding over the erecting areas [AF(1), AF(2)] or at least over one erecting area, and
during the turning, the transporting component (U-Fb) transports the object in the transporting direction (T).

3. Apparatus according to Claim 1 or Claim 2,
**characterized in that**
at least one erecting stage [AK(1), AK(2)] comprises a continuous conveyor belt [A-Fb(1), A-Fb(2)], and
the continuous conveyor belt [A-Fb(1), A-Fb(2)] is inclined with respect to the horizontal in such a way
that the erecting area [AF(1), AF(2)] of this erecting stage [AK(1), AK(2)] is formed by this continuous conveyor belt [A-Fb(1), A-Fb(2)].

4. Apparatus according to Claim 3,
**characterized in that**
at least one erecting stage [AK(2)] comprises a continuous conveyor belt [A-Fb(2)],
which is itself turned in such a way
that, when seen in the transporting direction (T), the angle of inclination of the erecting area of this erecting stage [AK(2)] increases.

5. Apparatus according to one of Claims 1 to 4,
**characterized in that**
the turning and transporting device (DTE) comprises a stop edge (Kan),
the stop edge (Kan) is arranged underneath the erecting stages [AK(1), [AK(2)] and
the stop edge (Kan) is arranged in such a way that an object stands on the stop edge (Kan) and slides while the object is sliding over the erecting areas [AF(1), [AF(2)] or at least over one erecting area.

6. Apparatus according to one of Claims 1 to 5, **characterized in that**
two erecting stages AK(1), AK(2)], which - when seen in the transporting direction (T) - follow one another directly,
are designed in such a way that - when seen in a direction perpendicular to the transporting direction (T) - their erecting areas AF(1), AF(2)] overlap.

7. Method for erecting an object,
wherein
the object extends in an object plane and
the method comprises the steps that
the object is transported to a turning and transporting device (DTE) in such a way that
during this transport, the object lies on a transporting area (Tf) and
the object plane extends parallel to the transporting area (Tf),
the turning and transporting device (DTE) turns the flat object
about an axis of rotation (DA), lying in the object plane, in such a way that, after the turning, the object plane of the object is approximately perpendicular, and
while it is being turned, transports said object in a transporting direction (T) and
the turned object is transported away in such a way that, while it is being transported away, its object plane is approximately perpendicular,
**characterized in that**
the turning and transporting device (DTE) comprises at least two erecting areas [AF(1), AF(2)] connected in series,
the turning and transporting device (DTE) transports the object while it is being turned in the transporting direction (T) in such a way that
the object slides over all the erecting areas [AF(1), AF(2)] one after the other, and
by being transported in this way, the object is erected step by step, and
each of these erecting areas [AF(1), AF(2)] is inclined in a sloping manner with respect to the horizontal at each point along the extent of the erecting area [AF(1), AF(2)] in the transporting direction (T) by in each case an angle of inclination [α(1), α(2)],
wherein the smallest angle of inclination [α(2)] of an erecting area [AF(2)] is greater than the greatest angle of inclination [α(1)] of the preceding erecting area [AF(1] - seen in the transporting direction (T).

8. Method according to Claim 7,
**characterized in that**
the flat object stands with an edge on a transporting component (U-Fb) of the turning and transporting device (DTE), while the object is sliding over the erecting areas [AF(1), AF(2)], and
during the turning, the transporting component (U-Fb) transports the object in the transporting direction (T).

## Revendications

1. Dispositif de redressement d'un objet,
dans lequel
l'objet s'étend dans un plan,
le dispositif comprend
- un dispositif ( ZE ) d'amenée ayant une surface ( Tf ) de transport,
- un dispositif ( WE ) d'emmenée et
- un dispositif ( DTE ) de rotation et de transport,
le dispositif ( ZE ) d'amenée est conformé pour transporter un objet plat, de manière à ce que l'objet repose, pendant le transport, sur la surface ( Tf ) de transport et de manière à ce que le plan de l'objet s'étende parallèlement à la surface ( Tf ) de transport,
le dispositif ( DTE ) de rotation et de transport est conformé pour
- faire tourner un objet autour d'un axe ( DA ) de rotation passant par le plan de l'objet, de manière à ce que le plan de l'objet soit, après la rotation, à peu près vertical et
- pour transporter l'objet, lors de la rotation dans un dispositif ( T ) de transport, du dispositif ( ZE ) d'amenée au dispositif ( WE ) d'emmenée et
le dispositif ( WE ) d'emmenée est conformé pour évacuer un objet tourné, de manière à ce que son plan soit à peu près vertical lors de l'évacuation,
**caractérisé en ce que**
- le dispositif ( DTE ) de rotation et de transport comprend au moins deux étages [AK( 1 ), AK( ( 2 )] de redressement montés en série,
- chaque étage [AK( ( 1 ), AK( ( 2 )] de redressement comprend respectivement une surface [AF( ( 1 ), AF( ( 2 )] de redressement,
- le dispositif ( DTE ) de rotation et de transport est conformé pour transporter un objet, lors de la rotation dans le dispositif ( T ) de transport, de manière à ce que l'objet glisse sur toutes les surfaces [AF( ( 1 ), AF( ( 2 )] de redressement les unes après les autres et soit ainsi redressé pas à pas et
- chacune de ces surfaces [AF( ( 1 ), AF( ( 2 )] de redressement est, en chaque point, le long de l'étendue de la surface [AF( 1 ), AF( 2 )] de redressement dans le dispositif ( T ) de transport, inclinée de respectivement un angle [α( 1 ), α( 2 )] d'inclinaison, à pic par rapport à l'horizontal,
- dans lequel l'angle [α( 2 )] d'inclinaison le plus petit d'une surface [AF( ( 2 )] de redressement est plus grand que l'angle [α( ( 1 )] d'inclinaison le plus grand de la surface [AF( ( 1 )] de redressement précédente dans le sens ( T ) de transport.

2. Dispositif suivant la revendication 1,
**caractérisé en ce que**
le dispositif ( DTE ) de rotation et de transport a un dispositif de transport ayant un composant ( U-Fb ) de transport entraîné,
le composant ( U-Fb ) de transport est disposé de manière à ce que
- un objet repose sur le composant ( U-Fb ) de transport, tandis que l'objet glisse sur les surfaces [AF( 1 ), AF( ( 2 )] de redressement ou au moins sur une surface de redressement et
- le composant ( U-Fb ) de transport transporte l'objet dans le sens ( T ) de transport pendant la rotation.

3. Dispositif suivant la revendication 1 ou la revendication 2,
**caractérisé en ce que**
- au moins un étage [AK( 1 ), AK( 2 )] de redressement comprend un tapis [A-Fb ( 1 ) , A-Fb ( 2 ] convoyeur sans fin et
- le tapis [A-Fb( ( 1 ), A-Fb( ( 2 )] convoyeur sans fin est incliné par rapport à l'horizontal, de façon à ce que la surface [AF( ( 1 ), AF( ( 2 )] de redressement de cet étage [AK( ( 1 ), AK( ( 2 )] de redressement soit formée par ce tapis [A-Fb( 1 ), A-Fb( 2 )] convoyeur sans fin.

4. Dispositif suivant la revendication 3,
**caractérisé en ce que**
au moins un étage [AK( 2 )] de redressement comprend un tapis [A-Fb( 2 )] convoyeur sans fin,
que l'on fait tourner en soi,
de manière à ce que l'angle d'inclinaison de la surface de redressement de cet étage [AK( ( 2 )] de redressement augmente, considéré dans le sens ( T ) de transport.

5. Dispositif suivant l'une des revendications 1 à 4,
**caractérisé en ce que**
- le dispositif ( DTE ) de rotation et de transport comprend un bord ( Kan ) de butée,
- le bord ( Kan ) de butée est disposé en dessous des étages [AK( ( 1 ), AK( 2 )] de redressement et
- le bord ( Kan ) de butée est disposé de manière à ce qu'un objet repose et glisse sur le bord ( Kan ) de butée, tandis que l'objet glisse sur les surfaces [AF( 1 ), AF( 2 )] de redressement ou au moins sur une surface de redressement.

6. Dispositif suivant l'une des revendications 1 à 5,
**caractérisé en ce que**
- deux étages [AF( 1 ), AF( 2 )] de redressement, qui, considéré dans le sens ( T ) de transport, se suivent directement l'un l'autre,
- sont conformés de manière à ce que leur surface [AF( 1 ), AF( 2 )] de redressement se chevauchent, considérée dans une direction perpendiculaire au sens ( T ) de transport.

7. Procédé de redressement d'un objet,
dans lequel
l'objet s'étend dans un plan et
le procédé comprend les stades suivant lesquels on transporte l'objet à un dispositif ( DTE ) de rotation et de transport, de façon à ce que
- l'objet se trouve pendant ce transport sur une surface ( Tf ) de transport et
- le plan de l'objet s'étende parallèlement à la surface ( Tf ) de transport,
le dispositif ( DTE ) de rotation et de transport fait tourner l'objet plat
- autour d'un axe ( DA ) de rotation passant dans le plan de l'objet, de manière à ce que le plan de l'objet soit à peu près vertical après la rotation et
- transporte l'objet plat dans un sens ( T ) de transport lors de la rotation et
l'objet tourné est évacué, de manière à ce que son plan soit à peu près vertical lors de l'évacuation,
**caractérisé en ce que**
le dispositif ( DTE ) de rotation et de transport comprend au moins deux surfaces [AF( 1 ), AF( 2 )] de redressement montées en série,
le dispositif ( DTE ) de rotation et de transport transporte l'objet dans le sens ( T ) de transport à la rotation, de manière à ce que
- l'objet glisse sur toutes les surfaces [AF( 1 ), AF( 2 )] de redressement les unes après les autres et
- l'objet soit redressé pas à pas par ce transport et
chacune de ces surfaces [AF( 1 ), AF( 2 )] de redressement soit, en chaque point, le long de l'étendue de la surface [AF( 1 ), AF( 2 )] de redressement dans le dispositif ( T ) de transport, inclinée de respectivement un angle [α( 1 ), α( 2 )] d'inclinaison, à pic par rapport à l'horizontal,
dans lequel l'angle [α( 2 )] d'inclinaison le plus petit d'une surface [AF( 2 )] de redressement est plus grand que l'angle [α( 1 )] d'inclinaison le plus grand de la surface [AF( 1 )] de redressement précédente dans le sens ( T ) de transport.

8. Procédé suivant la revendication 7,
**caractérisé en ce que**
l'objet plat repose par un bord sur un composant ( U-Fb ) de transport du dispositif ( DTE ) de rotation et de transport, tandis que l'objet glisse sur les surfaces [AF( 1 ), AF( 2 )] de redressement et
le composant ( U-Fb ) de transport transporte l'objet dans le sens ( T ) de transport pendant la rotation.
